# EUROPEAN PATENT APPLICATION

(11) **EP 2 779 395 A1**
(43) Date of publication of application: **17.09.2014**
(21) Application number: 12848588.5
(22) Date of filing: 08.11.2012
(51) Int. Cl.: H02M 3/00, B60L 11/18, H02J 1/00

(54) **POWER CONVERSION DEVICE**

(30) Priority: 08.11.2011 JP 2011244630
(71) Applicant: Panasonic Corporation, Osaka 571-8501 (JP)
(72) Inventor: MASUDA, Takuya, Osaka-shi, Osaka 540-6207 (JP); KOBAYASHI, Susumu, Osaka-shi, Osaka 540-6207 (JP)
(74) Representative: Appelt, Christian W.
(86) International application number: PCT/JP2012/007166
(87) International publication number: WO 2013/069282

(57) **Abstract**

A power converter 1 includes: a DC/DC unit 2 converting DC voltage supplied from an electric vehicle V to a first DC voltage for a home 20 or a second DC voltage for an electric appliance 24; a first power line L1 outputting the first DC voltage; a second power line L2 outputting the second DC voltage; a relay 3; an external connector 4 to which the electric appliance 24 is connected; and a controller 5 controlling the DC/DC unit and relay 3. During regular operation, the controller 5 causes the DC/DC unit 2 to convert the DC voltage to the first DC voltage and brings the relay 3 into a disconnected state to supply the first DC voltage via the first power line L1. When the first power line L1 is offline, the controller 5 causes the DC/DC unit 2 to convert the DC voltage to the second DC voltage and brings the relay 3 into a feeding state to supply the second DC voltage via the second power line L2.

## Description

### TECHNICAL FIELD

The present invention relates to a power conversion device that converts direct-current voltage.

### BACKGROUND ART

As the techniques to connect a home and a hybrid or electric vehicle and supply electric power stored in the battery of the hybrid or electric vehicle to electrical appliances provided in the home, a device for supplying electric power at power outage and a home wiring structure which are described in Patent Literature 1 below are known. Patent Literature 1 describes a home wiring structure including an emergency power supply path for supplying electric power from the battery of a vehicle to electric appliances as loads in home.

However, the technique described in Patent Literature 1 requires a special power conversion circuit (an inverter) in order to supply electric power in the vehicle battery to the home and allow the electric appliances to operate only with the electric power supplied from the vehicle battery for autonomous operation in emergencies including power outage.

In the light of the aforementioned current situations, an object of the present invention is to provide a power conversion device which can implement autonomous operation without providing a special power conversion circuit.

### CITATION LIST

### PATENT LITERATURE

Patent Literature 1: Japanese Patent Laid-open Publication No. 2006-158064 (Japanese Patent No. 4578952)

### SUMMARY OF INVENTION

A power conversion device according to a first aspect to solve the aforementioned problem is a power conversion device which can be connected to an electric vehicle, a home and an electric appliance, the device including: a power converter converting direct-current voltage supplied from the electric vehicle to a first direct-current voltage for the home or a second direct-current voltage for the electric appliance; a first power line outputting the first direct voltage obtained at the power converter; a second power line outputting the second direct-current voltage obtained at the power converter; a relay provided for the second power line; an external connector which is connected to the second power line and to which the electric appliance can be connected; and a controller controlling the power converter and the relay. In the above power conversion device, during regular operation, the controller causes the power converter to convert direct-current voltage to the first direct-current voltage and brings the relay into a disconnected state to supply the first direct-current voltage via the first power line; and, when the first power line is offline, the controller causes the power converter to convert the direct-current voltage to the second direct-current voltage and brings the relay into a supplying state to supply the second direct-current voltage via the second power line.

A second aspect is the power conversion device according to the first aspect in which voltage standard of the external connector is set to a predetermined low voltage and the power converter converts the direct-current voltage to the first direct-current voltage or the predetermined low voltage.

A third aspect is the power conversion device according to the second aspect in which the predetermined low voltage is any one selected from 3, 6, 12, 24, and 48 V.

A fourth aspect is the power conversion device according to the third aspect in which the external connector includes a plurality of external connectors with the predetermined low voltage set to different values, the device further including: a connection detector detecting one of the plurality of external connecters to which the electric appliance is connected. Moreover, in the power conversion device, the controller causes the power converter to set the second predetermined voltage to the predetermined low voltage corresponding to the detected external connector.

A fifth aspect is the power conversion device according to any one of the first to fourth aspects which further includes a voltage detector provided for the second power line. In the power conversion device, the controller brings the relay into the disconnected state when voltage detected by the voltage detector reaches a predetermined safe voltage or higher when the first power line is offline.

### BRIEF DESCRIPTION OF DRAWINGS

Fig. 1 is a block diagram illustrating a configuration of a power converter as an embodiment of the present invention.
Fig. 2 is a block diagram illustrating another configuration of the power converter as the embodiment of the present invention.
Fig. 3 is a block diagram illustrating the behavior during regular operation in the power converter as the embodiment of the present invention.
Fig. 4 is a block diagram illustrating the behavior during autonomous operation in the power converter as the embodiment of the present invention.
Fig. 5 is a block diagram illustrating another configuration of the power converter as the embodiment of the present invention.
Figs. 6(a) to 6(d) are diagrams illustrating control signals supplied from a controller to a DC/DC unit in the power converter as the embodiment of the present invention, Figs. 6(a) to 6(d) showing the control signals corresponding to DC 6, 12, 24, and 48 V, respectively.
Fig. 7 is a block diagram illustrating another configuration of the power converter as the embodiment of the present invention.

### DESCRIPTION OF EMBODIMENTS

Hereinafter, a description is given of an embodiment of the present invention with reference to the drawings.

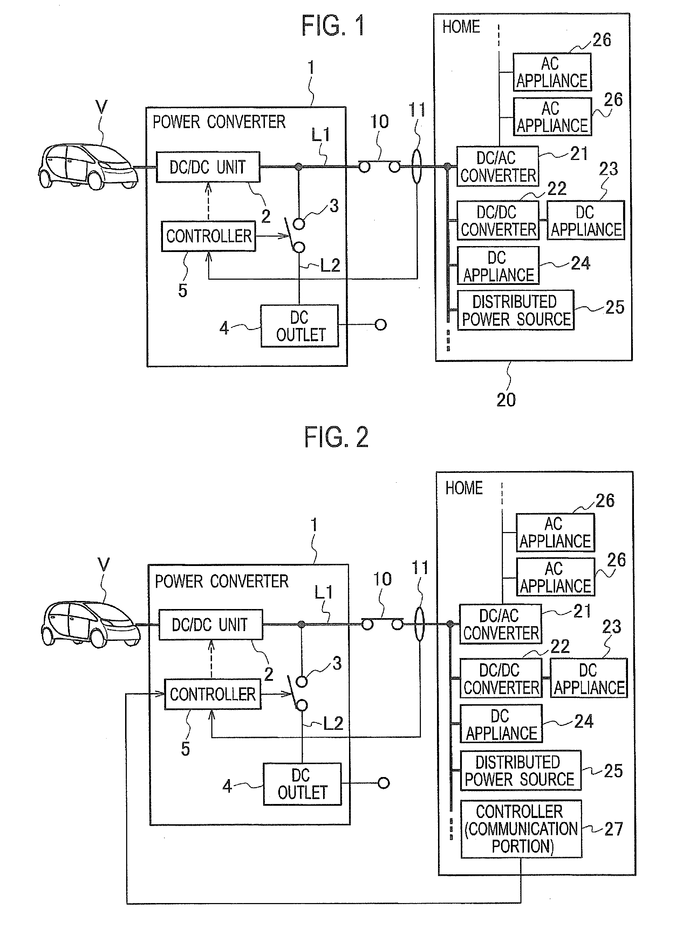

A power converter 1 shown as the embodiment of the present invention is configured as illustrated in Fig. 1, for example. The power converter 1 is connected to an electric vehicle V such as a hybrid or an electric vehicle. The power converter 1 is connected to the electric vehicle V by a power cable through which a predetermined electric power is exchanged. The power converter 1 is connected to a home 20 via a home bus. Between the power converter 1 and home 20, a power line (a first power line) L1 connecting the power converter 1 and home 20 is provided with a relay 10. Moreover, in order to detect voltage between the power converter 1 and home 20, the power line (first power line) L1 is provided with a voltage sensor 11. The voltage value detected by the voltage sensor 11 is sensed by the power converter 1.

The home 20 includes a DC/DC converter 21, a DC/DC converter 22, one or plural DC appliances 23 and 24, a distributed power source 25, and one or plural AC appliances 26.

The power converter 1 exchanges electric power between the electric vehicle V and home 20. In the process of charging the electric vehicle V, the electric vehicle V is charged with electric power supplied from a not-shown electrical grid through the DC/AC converter 21 or direct-current (DC) power generated by a solar or a fuel cell.

The DC/AC converter 21 exchanges electric power with the electric vehicle V through the power converter 1. In the process of charging the electric vehicle V, the DC/AC converter 21 supplies to the power converter 1, electric power supplied from a not-shown electrical grid and DC power generated by a solar or fuel cell. On the other hand, the DC/AC converter 21 converts to an AC power source, the electric power supplied from the electric vehicle V through the power converter 1. The DC/AC converter 21 supplies the obtained AC power source to the AC appliances 26.

The DC appliance 24 is connected to the home bus connecting the power converter 1 and DC/AC converter 21. The DC appliance 24 operates with the DC voltage supplied from the DC/AC converter 21 or power converter 1. Moreover, when the home bus (in emergencies) is offline, the DC appliance 24 can be connected to a DC outlet 4 (an external connector) of the power converter 1 and can operate with the DC voltage supplied from the power converter 1. The disconnection of the home bus includes disconnection intentionally made by a user as well as the disconnection due to disasters.

The home 20 includes a DC/DC converter 21, a DC/DC converter 22, one or plural DC appliances 23 and 24, a distributed power source 25, and one or plural AC appliances 26.

The DC/AC converter 21 can supply power supplied from a not-shown electrical grid to the power converter 1 at charging the electric vehicle V. On the other hand, the DC/AC converter 21 converts to the AC power source, the power supplied from the electric vehicle V through the power converter 1. The DC/AC converter 21 can also convert to the AC power source, the electric power obtained from the distributed power source 25, which is composed of a solar cell, a fuel cell, or the like. The DC/AC converter 21 supplies the obtained AC power source to the AC appliances 26.

The DC appliance 23 is connected via the DC/DC converter 22 to the home bus connecting the electric converter 1 and DC/AC converter 21. The DC appliance 23 operates with DC power supplied from the DC/AC converter 21 or the power converter 1 and distributed power source 25. Moreover, when the home bus is offline (in emergencies), the DC appliance 23 can be connected to the DC outlet 4 (the external connector) of the power converter 1 to operate with DC voltage supplied from the power converter 1. The plural DC appliances 24 are supplied with DC power from the power converter 1 to operate with the supplied DC power.

The power converter 1 includes a DC/DC unit 2, a relay 3, the DC outlet 4, and a controller 5. The power converter 1 supplies electric power converted at the DC/DC unit 2 to the home 20 via the power line (the first power line) L1 or to the DC outlet 4 via the relay 3 of the second power line L2.

The DC/DC unit 2 is connected to the electric vehicle V through a predetermined power cable. The DC/DC unit 2 is supplied with electric power at a predetermined voltage from a battery installed in the electric vehicle V. The DC/DC unit 2 is capable of converting a predetermined voltage to a first DC voltage for the home 20 or a second DC voltage for the DC appliance 23. The DC/DC unit 2 outputs the converted electric power via the power line (first power line) L1 connected to the home 20 or from the DC outlet 4 connected through the second power line L2.

In this embodiment, the DC/DC unit 2 is capable of converting the predetermined voltage to a voltage of 3[00 to 4[00 V as the first DC voltage, for example. Moreover, the DC/DC unit 2 is capable of converting the predetermined voltage to a voltage of 0 to 60 V as the second DC voltage, for example.

The operation of the DC/DC unit 2 is controlled by the controller 5. The DC/DC unit 2 converts electric power with the predetermined voltage to power with the first or second voltage in accordance with the control of the controller 5.

The controller 5 controls the DC/DC unit 2 and relay 3 based on the voltage detected by the voltage sensor 11.

The controller 5 can also control the DC/DC unit and relay 3 based on signals from a controller 27 of the home 20 when the controller 5 can communicate with the controller 27 of the home 20 as illustrated in Fig. 2. In the case of disaster, the controller 5 can therefore receive a signal from the home 20 to control the output voltage of the DC/DC unit 2 and cause the relay 3 to be closed. The signal supplied from the home 20 to the power converter 1 can be intentionally transmitted by a user in addition to the time of a disaster. The thus-configured controller 5 can control the DC/DC unit 2 and relay 3 based on the voltage detected by the voltage sensor 11 or signals from the controller 27 of the home 20.

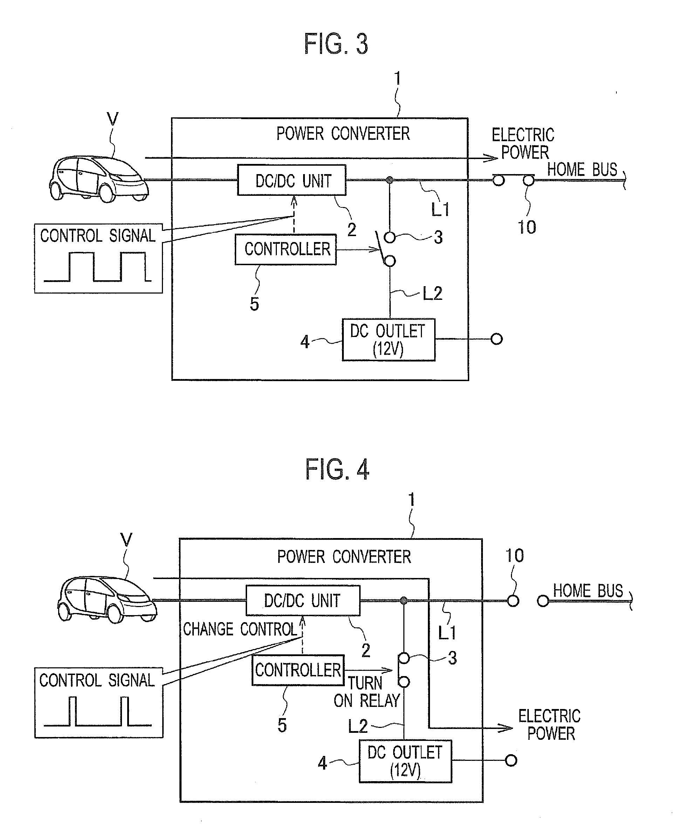

When the voltage detected by the voltage sensor 11 is a normal value, as illustrated Fig. 3, the controller 5 causes the DC/DC unit 2 to convert the voltage to a voltage of 3[00 to 4[00 V as the first DC voltage and turns the relay 3 into the disconnected state (the open or off state). In this process, the controller 5 supplies to the DC/DC unit 2, a control signal to adjust the duty ratio to the predetermined value for home. The power converter 1 can thereby supply a previously set home voltage of 3[00 to 4[00 V to the home 20.

On the other hand, when the power line (first power line, home bus) L1, which connects the power converter 1 and home 20, is offline (when the relay 10 is opened) as illustrated in Fig. 4, the controller 5 determines the disconnection based on the voltage value detected by the voltage sensor 11. In this case, the power converter 1 performs autonomous operation which allows the DC appliance 23 of the home 20 to operate only with electric power supplied from the electric vehicle V. In this process, the controller 5 causes the DC/DC unit to convert the predetermined voltage to an electric appliance voltage of 0 to 60 V as the second DC voltage and turns the relay 3 into the power supplying state (the closed or on state). When the standard voltage of the DC outlet is 12 V, for example, the controller 5 supplies the DC/DC unit 2 with a control signal which sets the duty ratio to a predetermined value for electric appliances. This second duty ratio (on time to off time) is lower than that during the regular operation. The power converter 1 can thereby supply the previously set DC voltage of 12V.

As described above, according to the power converter 1, the first and second power lines L1 and L2 are provided for the DC/DC unit 2 to control the operation of the DC/DC unit, so that autonomous operation can be performed without providing a special power conversion circuit.

In the power converter 1, it is preferable that the voltage standard of the DC outlet 4 as the external connector is set to a predetermined low voltage. Moreover, it is preferable that this predetermined low voltage is a safe voltage in usual use and is selected from 3, 6, 12, 24, and 48 V. This predetermined low voltage is set or selected in accordance with control of the controller 5 to control the operation of the DC/DC unit 2. The DC/DC unit 2 thus converts DC voltage to the first DC voltage (a voltage of 300 to 400 V) or to the set or selected predetermined low voltage.

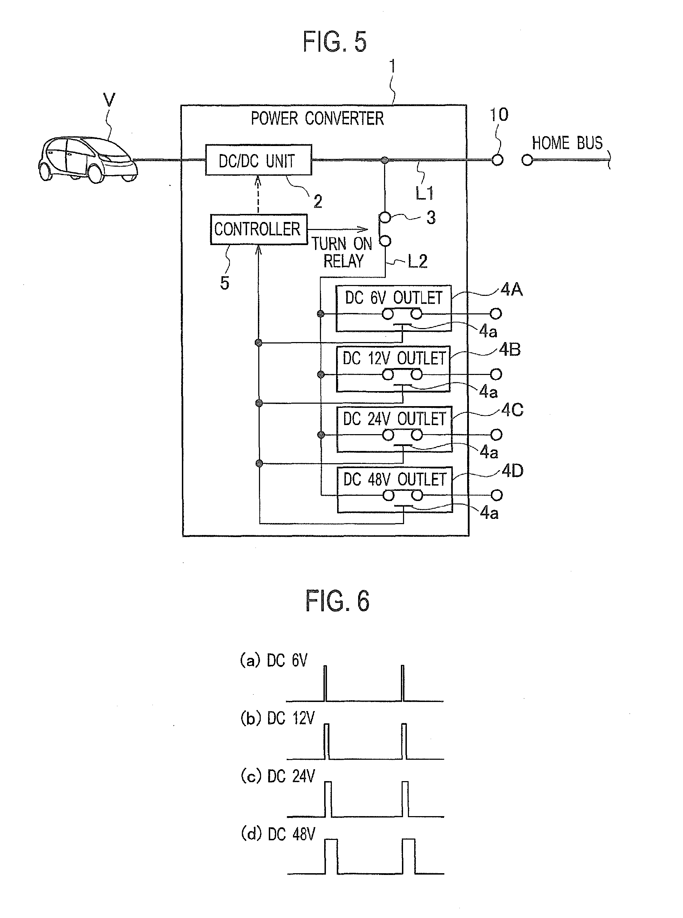

Furthermore, as illustrated in Fig. 5, the power converter 1 may include plural DC outlets 4 whose standard voltages are different predetermined low voltages. The standard voltages of these DC outlets 4A to 4D are 6, 12, 24, and 48 V, respectively. Fig. 5 shows the DC outlets by way of example, and it is certain that the DC outlets may be configured in another pattern.

Each of the DC outlets 4A to 4D includes a connection detector 4a which detects that the DC appliance 23 is connected thereto. The connection state detected by the connection detector 4a is transmitted to the controller 5. The controller 5 adjusts the output voltage (the second predetermined voltage) of the DC/DC unit 2 so that the output voltage matches the standard voltage of the DC outlet to which it is detected that the DC appliance 23 is connected.

When the DC appliance 23 is connected to the 6V standard DC outlet 4A, the controller 5 supplies a control signal having a duty ratio illustrated in Fig. 6(a) to the DC/DC unit 2. When the DC appliance 23 is connected to the 12V standard DC outlet 4B, the controller 5 supplies a control signal having a duty ratio illustrated in Fig. 6B to the DC/DC unit 2. When the DC appliance 23 is connected to the 24V standard DC outlet 4C, the controller 5 supplies the control signal having a duty ratio illustrated in Fig. 6C to the DC/DC unit 2. When the DC appliance 23 is connected to the 48V standard DC outlet 4D, the controller 5 supplies a control signal having a duty ratio illustrated in Fig. 6(d) to the DC/DC unit 2. In such a manner, the controller 5 increases the duty ratio of the control signal supplied to the DC/DC unit 2 as the predetermined low voltage increases from 6 V to 24 V.

As described above, according to the power converter 1, it is possible to automatically detect the DC outlet 4 to which the DC appliance 23 is connected and automatically adjust the output of the DC/DC unit 2 depending on the detected DC outlet 4. According to the power converter 1, it is therefore possible to implement autonomous operation by automatically controlling the DC/DC unit 2 and supplying electric power of the electric vehicle V to the DC appliance 23 located at the home 20 when the DC appliance 23 meets the standard of any one of the DC outlets 4.

The embodiment in which the DC/DC unit 2 is controlled by the duty ratio is just an example. The controller 5 may control the DC/DC unit 2 not only based on the duty ratio but also based on a frequency control signal or another control signal.

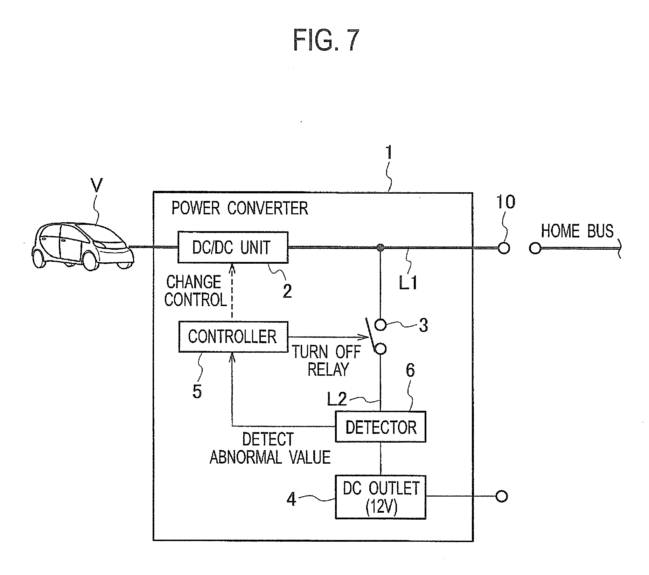

Furthermore, it is preferable that the aforementioned power converter 1 includes a detector 6 provided for the second power line L2 as illustrated in Fig. 7. In this power converter 1, when the home bus (the first power line L1) is offline, the controller 5 causes the DC/DC unit 2 to output a predetermined low voltage and turns the relay 3 into the conducting state. However, when the voltage or current detected by the detector 6 is equal to or higher than an abnormal value which is not less than a predetermined safe value, the controller 5 turns the relay 3 into the disconnected state (the off state).

According to this power converter 1, it is possible to stop supplying electric power when the output voltage or current of the DC/DC unit 2 reaches an abnormal value or higher because of unforeseen circumstances. Accordingly, the power converter 1 can prevent breakage of the DC appliance 23 or an electric shock due to accidental overvoltage or overcurrent during the autonomous operation, thus enhancing the safety.

The aforementioned embodiment is just an example of the present invention. Accordingly, the present invention is not limited to the aforementioned embodiment and, in addition to the embodiment, can be variously changed in accordance with the design without departing from the technical idea of the present invention.

The entire contents of Japanese Patent Application No. 2011-244630 (filed on: 8 November 2011) are incorporated by reference.

### INDUSTRIAL APPLICABILITY

According to the present invention, it is possible to implement autonomous operation without providing a special power conversion circuit by providing the first and second power lines for the power converter to control the operation of the power converter.

1: POWER CONVERTER (POWER CONVERSION DEVICE)
2: DC/DC UNIT (POWER CONVERTER)
3: RELAY
4: DC OUTLET (EXTERNAL CONNECTOR)
5: CONTROLLER
6: VOLTAGE DETECTOR
20: HOUSE
22: DC APPLIANCE (ELECTRIC APPLIANCE)
L1: FIRST POWER LINE
L2: SECOND POWER LINE
V: ELECTRIC VEHICLE

## Claims

1. A power conversion device which can be connected to an electric vehicle, a home and an electric appliance, the power conversion device comprising:
a power converter configured to convert direct-current voltage supplied from the electric vehicle to a first direct-current voltage for the home or a second direct-current voltage for the electric appliance;
a first power line outputting the first direct voltage obtained at the power converter;
a second power line outputting the second direct-current voltage obtained at the power converter;
a relay provided for the second power line;
an external connector which is connected to the second power line and to which the electric appliance can be connected; and
a controller configured to control the power converter and the relay, wherein
during regular operation, the controller causes the power converter to convert direct-current voltage to the first direct-current voltage and brings the relay into a disconnected state to supply the first direct-current voltage via the first power line; and, when the first power line is offline, the controller causes the power converter to convert the direct-current voltage to the second direct-current voltage and brings the relay into a supplying state to supply the second direct-current voltage via the second power line.

2. The power conversion device according to claim 1, wherein voltage standard of the external connector is set to a predetermined low voltage, and
the power converter converts the direct-current voltage to the first direct-current voltage or the predetermined low voltage.

3. The power conversion device according to claim 2, wherein the predetermined low voltage is any one selected from 3, 6, 12, 24, and 48 V.

4. The power conversion device according to claim 3, wherein
the external connector includes a plurality of external connectors with the predetermined low voltage set to different values,
the power conversion device further comprising: a connection detector detecting one of the plurality of external connecters to which the electric appliance is connected, and wherein
the controller causes the power converter to set the second predetermined voltage to the predetermined low voltage corresponding to the detected external connector.

5. The power conversion device according to any one of claims 1 to 4, further comprising:
a voltage detector provided for the second power line, wherein
the controller brings the relay into the disconnected state when voltage detected by the voltage detector reaches a predetermined safe voltage or higher when the first power line is offline.
